# EUROPÄISCHE PATENTSCHRIFT

(11) **EP 3 807 728 B1**
(45) Veröffentlichungstag und Bekanntmachung des Hinweises auf die Patenterteilung: **29.04.2026**
(21) Anmeldenummer: 19739953.8
(22) Anmeldetag: 04.07.2019
(51) Int. Cl.: G05B 19/042, G05B 19/05, H04L 67/12

(54) **PROZESSSTEUERUNGSEINHEIT UND VERFAHREN ZUM INTERPROZESSUALEN AUSTAUSCH VON PROZESSVARIABLEN**
PROCESS CONTROL UNIT AND METHOD FOR INTERPROCESS EXCHANGE OF PROCESS VARIABLES
UNITE DE COMMANDE DE PROCESSUS ET PROCEDE POUR L'ECHANGE DE VARIABLES DE PROCESSUS ENTRE PROCESSUS

(30) Priorität: 13.08.2018 EP 18188724
(43) Veröffentlichungstag der Anmeldung: 21.04.2021
(73) Patentinhaber: Siemens Aktiengesellschaft, 80333 München (DE)
(72) Erfinder: REICHMANN, Jürgen, 81825 München (DE); GÖTZ, Jan, 91054 Buckenhof (DE); PELZER, Alexander, 90763 Fürth (DE)
(74) Vertreter: Siemens Patent Attorneys
(86) Internationale Anmeldenummer: PCT/EP2019/068016
(87) Internationale Veröffentlichungsnummer: WO 2020/035214

(56) Entgegenhaltungen:
- EP-A1- 3 208 974
- SIMON BROOKS: "OPC UA TSN: universal language for real-time data exchange", INDUSTRIAL ETHERNET BOOK, ISSUE 102 / 14, 31 October 2017 (2017-10-31), pages 1 - 2, XP055553061, Retrieved from the Internet <URL:https://iebmedia.com/index.php?id=12538&parentid=74&themeid=255&hft=102&showdetail=true&bb=1> [retrieved on 20190207]
- D BRUCKNER: "OPC UA TSN A new Solution for Industrial Communication", AUTOMATION WORLD, 3 May 2018 (2018-05-03), XP055553077, Retrieved from the Internet <URL:https://www.automationworld.com/opc-ua-tsn-new-solution-industrial-communication> [retrieved on 20190207]
- DIETMAR BRUCKNER ET AL: "OPC UA TSN A new Solution for Industrial Communication", AUTOMATION WORLD, 3 May 2018 (2018-05-03), pages 1 - 10, XP055553010, Retrieved from the Internet <URL:https://www.automationworld.com/sites/default/files/opc_ua_tsn_whitepaper_1.pdf> [retrieved on 20190207]
- MATTHIAS DAMM: "OPC Day Europe 2017", 31 December 2017 (2017-12-31), XP055483789, Retrieved from the Internet <URL:http://www.spectaris.de/ftp/PG_Schnittstellen/7a_PubSub-Insigths_Damm.pdf> [retrieved on 20180613]
- POP PAUL ET AL: "Enabling Fog Computing for Industrial Automation Through Time-Sensitive Networking (TSN)", IEEE COMMUNICATIONS STANDARDS MAGAZINE, IEEE, vol. 2, no. 2, 1 June 2018 (2018-06-01), pages 55 - 61, XP011687316, ISSN: 2471-2825, [retrieved on 20180717], DOI: 10.1109/MCOMSTD.2018.1700057
- ANONYMOUS: "The Industrial Ethernet Book", THE INDUSTRIAL ETHERNET BOOK, 31 October 2017 (2017-10-31), XP055553081, Retrieved from the Internet <URL:https://iebmedia.com/index.php?view=&parentid=74&themeid=250&hid=&gORD=ASC&gSORT=headline&sstr=&lpage=&hpid=1&hft=102&countpos=10> [retrieved on 20190207]
- ANONYMOUS: "Hinweise zur Dokumentation (Handbuch �ber TwinCAT_Quickstart)", BECKHOFF AUTOMATION, 1 January 2016 (2016-01-01), pages 1 - 76, XP055326921, Retrieved from the Internet <URL:-> [retrieved on 20161207]
- NN: "TwinCat 3 - Konvergenz der Technologien", 31 December 2010 (2010-12-31), XP055265674, Retrieved from the Internet <URL:http://www.pc-control.net/pdf/042010/products/pcc_0410_twincat3_d.pdf> [retrieved on 20160415]
- ANONYM: "IoT und Industrie 4.0: realisiert mit TwinCAT", -, 1 November 2015 (2015-11-01), pages 1 - 16, XP055773724
- ANONYMOUS: "Manual TC3 IoT Communication (MQTT)", 13 December 2018 (2018-12-13), pages 1 - 128, XP055629989, Retrieved from the Internet <URL:https://download.beckhoff.com/download/document/automation/twincat3/TF6701_TC3_IoT_Communication_MQTT_EN.pdf> [retrieved on 20191008]

## Beschreibung

Die Erfindung betrifft eine Prozesssteuerungseinheit, welche insbesondere zur Steuerung oder Regelung einer Maschine oder Anlage eingesetzt wird. Die Erfindung betrifft im Weiteren ein Verfahren zum interprozessualen Austausch von Prozessvariablen.

In der Prozess- und Fertigungsautomatisierungstechnik werden Feldgeräte als Geräte aller Art verstanden, welche, prozessnah eingesetzt, prozessrelevante Informationen erfassen oder verarbeiten. Zur Erfassung von Prozessgrößen dienen Messgeräte bzw. Sensoren, beispielsweise zur Druckmessung, Temperaturmessung, Leitfähigkeitsmessung, Durchflussmessung, pH-Messung, Füllstandmessung. Zur Beeinflussung von Prozessgrößen werden Aktoren verwendet, beispielsweise Pumpen oder Ventile. Neben den zuvor genannten Sensoren und Aktoren werden unter Feldgeräten auch Geräte aller Art verstanden, die auf einer Feldebene angeordnet sind.

Die von Sensoren erfassten Messwerte werden üblicherweise über einen Feldbus an eine oder mehrere Prozesssteuerungseinheiten übermittelt, welche die Messwerte gegebenenfalls weiterverarbeiten. Auch in Rückrichtung erfolgt eine Datenübertragung von Prozesssteuerungseinheiten an Feldgeräte, insbesondere zur Ansteuerung von Aktoren sowie zur Konfiguration und Parametrierung der Feldgeräte.

Wenngleich moderne Prozesssteuerungseinheiten in Ihrem rechentechnischen Kern - üblicherweise einem Mikroprozessor oder Microcontroller mit einem zugeordneten flüchtigen Arbeitsspeicher zur Ausführung eines Steuerungsprogramms sowie mehrerer I/O-Schnittstellen - sich nur noch wenig von breit durchgesetzten Kleinrechnerarchitekturen zu unterscheiden scheinen, bedingt die Sensibilität der Steuerungsaufgabe und Ihrer möglichen Auswirkungen auf einen industriellen Prozess einige Besonderheiten. Diese gründen vor allem in einer starken Kopplung zwischen der physikalischen Außenwelt, also dem zu steuernden System, mit der Hardware und der Software der Prozesssteuerungseinheit. Eine Prozesssteuerungseinheit ist für einen bestimmten vorab zu konfigurierenden Bereich einer Automatisierungsaufgabe zuständig und hält die dafür nötigen Daten und Software lokal vor.

Erweiterungen in dieser Automatisierungsaufgabe - beispielsweise eine Erweiterung der Prozesssteuerungseinheit um zusätzliche Eingänge oder Ausgänge oder auch ein Software-Update des Steuerungsprogramms - erfordern derzeit einen kompletten Wechsel des auf der Prozesssteuerungseinheit ablaufenden Steuerungsprogramms, welcher mit einen Systemstopp, einer Neu-Kompilierung des Steuerungsprogramms und einen Systemneustart verbunden ist. Ein Update oder ein Wechsel des Steuerungsprogramms hat also einen vorübergehenden Produktionsausfall des von der Prozesssteuerungseinheit zu steuernden Systems zur Folge. Ein solcher Produktionsausfall ist in der Prozess- und Fertigungsautomatisierungstechnik generell zu vermeiden.

Im Stand der Technik wurde daher bereits die Notwendigkeit einer modularen Gestaltung der Software auf einer Prozesssteuerungseinheit erkannt, also einer Umgestaltung des derzeit weitgehend monolithischen Steuerungsprogramms hin zu einer Mehrzahl modular zusammenarbeitender Steuerungsprozesse.

Bei bislang bekannten Prozesssteuerungseinheiten stellt sich bei einer Änderung, einem Tausch oder Update modularer Steuerungsprozesse im laufenden Betrieb allerdings das Problem, dass ein interprozessualer Datenaustausch zwischen den Steuerungsprozessen derzeit im jeweiligen Steuerungsprozess definiert wird. Zusätzliche oder geänderte Steuerungsprozesse können daher nicht dynamisch eingebracht werden, da ein geänderter interprozessualer Datenaustausch zwischen einem geänderten Steuerungsprozess und einem bestehenden Steuerungsprozess nicht für alle Prozessvariablen funktioniert, beispielsweise wenn für einen geänderten Steuerungsprozess mehr oder andere Prozessvariablen kommuniziert werden sollen als für den ursprünglichen Steuerungsprozess. Weiterhin besteht derzeit keine Möglichkeit, einen interprozessualen Datenaustauschs eines bestehenden, laufenden Steuerungsprozess, dynamisch umzuleiten, während dessen Kommunikationspartner - ein zu ändernder Steuerungsprozess - einem Update unterliegt.

EP3208974A1 offenbart eine Power-Line-Carrier-(PLC) -Terminal-Steuereinrichtung, ein System und ein Verfahren, um eine einfache, intelligente und flexible Middleware-Plattform für das Internet der Dinge aufzubauen.

"Manual TC3 IoT Communication (MQTT); 13-12-2018" ist das Beckhoff-TwinCAT-3-Handbuch.

Vor diesem Hintergrund ist die vorliegende Erfindung vor die Aufgabe gestellt, eine Prozesssteuerungseinheit zu schaffen, welche einen flexibleren interprozessualen Austausch von Prozessvariablen für eine Mehrzahl von Steuerungsprozessen gewährleistet.

Die Aufgabe wird durch eine Prozesssteuerungseinheit mit den Merkmalen des Patentanspruchs 1 gelöst. Die erfindungsgemäße Prozesssteuerungseinheit ist zur Ausführung einer Mehrzahl von Steuerungsprozessen eingerichtet, wobei mindestens ein Steuerungsprozess die eigentliche Steuerungsaufgabe, also eine Steuerung eines industriellen Prozesses übernimmt. Weitere Steuerungsprozesse unterstützen diese Steuerungsaufgabe oder bieten zusätzliche Funktionalitäten.

Mindestens ein auf der Prozesssteuerungseinheit zur Abarbeitung gebrachter erster Steuerungsprozess ist dabei erfindungsgemäß so eingerichtet, dass zu seiner Abarbeitung ein Austausch von Prozessvariablen nicht direkt mit einem zweiten Steuerungsprozess vorgesehen ist, sondern dass dieser Austausch über ein zwischengeschaltetes Zuordnungsmodul erfolgt.

Die Prozessvariable umfasst eine Prozessvariablenidentifikation - etwa eine Adresse, einen Prozessvariablennamen etc. - sowie einen Prozessvariablenwert, insbesondere den zahlenmäßigen Wert einer Messgröße in einem vorgegebenen, ansonsten beliebigen, Datenformat oder auch einen binären Wert bzw. Flag, welcher das Eintreten oder Nicht-Eintreten einer Bedingung anzeigt.

Erfindungsgemäß ist zum Austausch der Prozessvariablen ein Zuordnungsmodul eingerichtet, durch welches eine vom ersten Steuerungsprozess übergebene Prozessvariable empfangen wird, deren Prozessvariablenidentifikation ausgelesen und an eine Zuordnungsvorschrift übergeben wird. Anhand der Zuordnungsvorschrift wird ermittelt, an welchen Steuerungsprozess oder an welche Steuerungsprozesse die Prozessvariablen zu übergeben ist. Anschließend wird die mindestens eine Prozessvariable anhand der aus der Zuordnungsvorschrift ermittelten Steuerungsprozesse an diese übergeben.

Ein besonderer Vorteil der Erfindung ist in der erhöhten Flexibilität im Austausch von Prozessvariablen zu sehen, welche in Abkehr von einer programmtechnisch eingefrorenen »logischen Verdrahtung« in den einzelnen Steuerungsprozessen nunmehr mittels eines Zuordnungsmodul erfolgt. Die Steuerungsprozesse sind hierzu so eingerichtet, dass eine Übergabe von Prozessvariablen generell an das Zuordnungsmodul erfolgt, von wo aus eine Weitervermittlung der Prozessvariablen aufgrund einer Zuordnungsvorschrift erfolgt. Diese Maßnahme gestattet, durch Änderung der Zuordnungsvorschrift einen Empfänger der Prozessvariablen durch einen anderen Empfänger zu ersetzen. Alternativ kann auch ein weiterer Empfänger für eine Prozessvariable durch eine entsprechende Änderung der Zuordnungsvorschrift hinzugefügt werden. Eine solche Maßnahme wäre vormals nur durch eine aufwändigere Änderung und Neukompilierung des die Prozessvariable sendenden Steuerungsprozesses möglich.

Die Aufgabe wird weiterhin durch ein Verfahren zum interprozessualen Austausch von Prozessvariablen innerhalb einer Prozesssteuerungseinheit sowie durch ein Computerprogramm zur Abarbeitung des erfindungsgemäßen Verfahrens gelöst. Das Computerprogramm wird als Steuerungsprozess in mindestens einem Prozessor einer Prozesssteuerungseinheit abgearbeitet, welcher mit der Abarbeitung das Verfahren ausführt.

Weitere Ausgestaltungen der Erfindung sind Gegenstand der abhängigen Patentansprüche.

Gemäß einer vorteilhaften Ausgestaltung ist vorgesehen, dass für eine oder mehrere an einen oder mehrere Steuerungsprozesse übergebene Prozessvariablen die im Zuordnungsmodul ausgelesene Prozessvariablenidentifikation durch eine von der Zuordnungsvorschrift vorgegebenen Prozessvariablenidentifikation vor der Übergabe ersetzt wird. Eine solche Ersetzung der Prozessvariablenidentifikation ist beispielsweise sinnvoll, wenn eine Prozessvariablenidentifikation in einem Empfänger-Steuerungsprozesse durch eine andere ersetzt wurde oder wenn die Prozessvariable bewusst auf einen Prozessvariablenempfänger umgeleitet werden soll.

Gemäß einer vorteilhaften Ausgestaltung ist vorgesehen, dass die Übergabe der Prozessvariablen an einen Steuerungsprozess zyklusorientiert erfolgt. Prozesssteuerungseinheiten arbeiten üblicherweise zyklusorientiert, wobei mindestens ein Steuerungsprozess oder auch ein Betriebssystem der Prozesssteuerungseinheit den Zyklus kontrolliert. Ein Steuerungsprozess aktualisiert das an den Eingängen der Prozesssteuerungseinheit von Sensoren einer Produktionsanlage ausgelegte Eingangsprozessabbild und übergibt dieses an mindestens einen anderen Steuerungsprozess. Nach Abarbeitung von Steueranweisungen übergibt der Steuerungsprozess dann ein Ausgangsprozessabbild, das dann von diesem oder einen anderen Steuerungsprozess bzw. dem Betriebssystem über die Ausgänge zu den Aktoren der Produktionsanlage weitergeleitet wird. Anschließend beginnt der Steuerungszyklus von vorne. Die Zykluszeit kann dabei fest vorgegeben oder auch asynchron ausgelegt sein. Ferner können Steuerungsprozesse mehrere zyklisch auszuführende Aufgaben bzw. Tasks umfassen, die jeweils unterschiedliche Zykluszeiten aufweisen. Jeder Task wird dann ein entsprechendes Eingangsprozessbild geliefert, das von Anweisungen der Task in ein Ausgangsprozessabbild übersetzt wird. Die einzelnen Prozessabbilder können dabei unterschiedlich groß sein, also unterschiedliche Datenmengen besitzen. Schnelle Tasks des Steuerungsprogramms benötigen dabei oft nur wenige Prozessdaten, während langsamere Tasks meist große Prozessdatenmengen verarbeiten.

Gemäß einer alternativen vorteilhaften Ausgestaltung ist vorgesehen, dass die Übergabe mindestens einer Prozessvariablen an mindestens einen zweiten Steuerungsprozess innerhalb einer vorgebbaren Zeitspanne erfolgt. Gemäß dieser Ausführungsform wird bei Empfang der Prozessvariablen am Zuordnungsmodul beispielsweise ein Zeitgeber gestartet, durch den eine Zeitspanne bis zur Übergabe des Wertes an den Empfänger der Prozessvariablen bestimmt wird. Alternativ wird der Prozessvariablen am Zuordnungsmodul ein Zeitstempel zugeordnet, durch den ein Zeitpunkt der Übergabe des Wertes an den Empfänger der Prozessvariablen bestimmt wird. Die Zeit oder die Zeitspanne kann in Zeiteinheiten definiert werden, in Zyklen eines Taktgebers oder in Stufen eines Zählers.

Gemäß einer alternativen Ausgestaltung ist vorgesehen, dass das Zuordnungsmodul eine Schnittstelle zu einem außerhalb der Prozesssteuerungseinheit ablaufenden Konfigurationsprozess aufweist. Diese vorteilhafte Maßnahme gewährleistet, dass ein Konfigurationsprozess zum Zweck einer Änderung der Zuordnungsvorschrift auf das Zuordnungsmodul zugreifen kann, ohne dass der dem Zuordnungsmodul zugrundeliegende Programmcode insgesamt geändert oder gar neu kompiliert werden muss. Gemäß einer vorteilhaften Ausgestaltung ist vorgesehen, dass mindestens ein Steuerungsprozess zur Abarbeitung einer iterativen Folge von Steueranweisungen zur Steuerung des außerhalb der Prozesssteuerungseinheit ablaufenden industriellen Prozesses eingerichtet ist. Dieser mindestens eine Steuerungsprozess verwirklicht die eigentliche Steuerungsaufgabe der Prozesssteuerungseinheit mit den verbundenen Feldgeräten.

Gemäß der Erfindung ist vorgesehen, dass das Zuordnungsmodul ein Steuerungsprozess ist, durch den eine Speicherung der Prozessvariablen in einem definierbaren Speicherbereich eines flüchtigen oder nichtflüchtigen Speichers vorgesehen ist.

Gemäß einer vorteilhaften Ausgestaltung ist vorgesehen, dass das Zuordnungsmodul einen Datenbus mit einer zugeordneten Bus-Datenbank umfasst. Der Datenbus kann zur Übergabe mindestens eines Prozessvariablenwerts gemäß eines in der Bus-Datenbank zugeordneten Prozessvariablenidentifikation eingerichtet sein.

Im Folgenden werden weitere Ausführungsbeispiele und Vorteile der Erfindung anhand der Zeichnung näher erläutert. Dabei zeigen:
- Fig. 1:: eine Ausführungsform einer erfindungsgemäßen Prozesssteuerungseinheit in einer Prinzipdarstellung;
- Fig. 2:: Eine Prinzipdarstellung einer logischen Verknüpfung zum Austausch mindestens einer Prozessvariablen zwischen zwei Steuerungsprozessen gemäß dem Stand der Technik;
- Fig. 3:: Eine Prinzipdarstellung einer logischen Verknüpfung zum Austausch mindestens einer Prozessvariablen zwischen zwei Steuerungsprozessen gemäß einem Ausführungsbeispiel; und;
- Fig. 4:: Eine Prinzipdarstellung einer logischen Verknüpfung zum Austausch mindestens einer Prozessvariablen zwischen internen und externen Steuerungsprozessen gemäß einem Ausführungsbeispiel; und;
- Fig. 5:: Eine Prinzipdarstellung einer logischen Verknüpfung zum Austausch mindestens einer Prozessvariablen zwischen mehreren Steuerungsprozessen gemäß einem Ausführungsbeispiel.

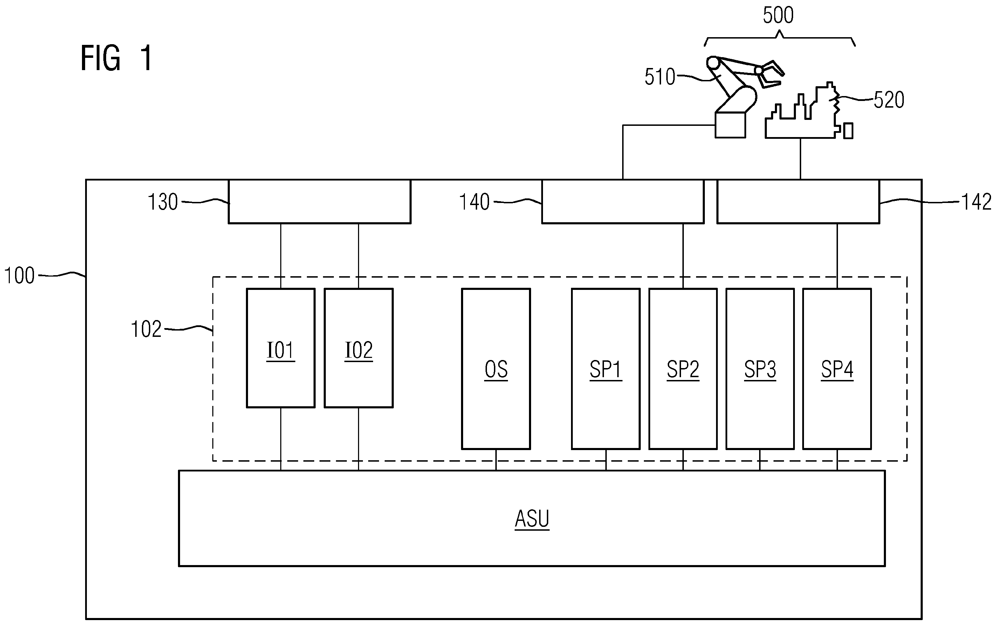

Fig. 1 zeigt eine Ausführungsform einer erfindungsgemäßen Prozesssteuerungseinheit 100 zur Steuerung einer Anlage 500, welche beispielsweise aus einem Roboter 510 und einer Fertigungsmaschine 520 besteht. Die Prozesssteuerungseinheit 100 liegt beispielsweise in Form einer speicherprogrammierbaren Steuerung oder SPS bzw. PLC (Programmable Logic Controller) vor.

Die Prozesssteuerungseinheit 100 umfasst einen strichliert dargestellten Speicherbereich 102, in dem eine Mehrzahl von Steuerungsprozessen SP1,SP2,SP3,SP4 geladen sind, welche von einem - nicht dargestellten - Mikroprozessor oder Microcontroller nebenläufig abgearbeitet werden.

Ein oder mehrere modular zusammenarbeitende Steuerungsprozesse SP1,SP2,SP3,SP4 dienen zur Implementierung spezifischer Funktionen wie z.B. Verknüpfungssteuerung, Ablaufsteuerung, Zeit-, Zähl- und arithmetische Funktionen, um durch digitale oder analoge Eingangs- und Ausgangssignale verschiedene Arten von Maschinen und Prozesse zu steuern. Die Prozesssteuerungseinheit 100 verfügt hierzu über Schnittstellen 140,142 zur Ansteuerung einer Anlage, einer Maschine oder zur Anbindung von Feldgeräten im Allgemeinen. Die Schnittstellen 140,142 sind an die Kommunikationsweise der angebundenen Anlagen, Maschinen oder Feldgeräten angepasst, hier dem Roboter 510 und der Fertigungsmaschine 520.

Im Beispiel der FIG. 1 ist die erste Schnittstelle 140 zur Steuerung des Roboters 510 als Feldbus-Schnittstelle 140, die zweite Schnittstelle 142 zur Steuerung der Fertigungsmaschine 520 als digitale Eingabe-Ausgabe-Schnittstelle 142 ausgebildet. Erstbesagte Feldbus-Schnittstellen 140 unterstützen insbesondere industrielle Kommunikationsstandards wie Profibus, Foundation Fieldbus, HART, Wireless HART etc. Letztlich erfolgt die Ansteuerung der Schnittstellen 140,142 anhand der zusammenarbeitenden Steuerungsprozesse SP1,SP2,SP3,SP4 derart, dass die Anlage, die Maschine oder der Prozess in einer vorgesehenen Art und Weise arbeitet.

Die Prozesssteuerungseinheit 100 verfügt weiterhin über mindestens eine Schnittstelle 130 zur paketorientierten Kommunikation mit beliebigen - nicht dargestellten - Kommunikationspartnern, beispielsweise Feldgeräte, übergeordnete Server wie beispielsweise einen Leitstand zur übergeordneten Steuerung eines industriellen Prozesses oder auch Engineering-Systeme zur Übertragung von aktualisierter Programmdaten von einem Engineering-System an die Prozesssteuerungseinheit 100.

Neben Feldbussen werden zunehmend auch drahtgebundene oder drahtlose Ethernet-Netzwerkverbindungen zur industriellen Kommunikation eingesetzt, welche aufgrund ihrer mannigfaltigen Vorteile künftig bis zur Ebene der Feldgerätekommunikation vordringen dürfte. Derartige paketorientiert kommunizierende Feldgeräte werden über die Schnittstelle 130 zur paketorientierten Kommunikation an die Prozesssteuerungseinheit 100 angebunden. Die besagte paketorientierte Kommunikation ist im industriellen Umfeld häufig IP-basiert (Internet Protocol), also gemäß einem Ethernet-Standard der Protokollfamilie IEEE 802 oder in Anlehnung daran ausgebildet. Die industriellen Anforderungen an einen deterministischen Datenaustausch mit Feldgeräten in einem Sub-Millisekundenbereich - oftmals auch als Echtzeitfähigkeit bezeichnet - erfordern heute nach wie vor Prozesssteuerungseinheiten 100 als direkte übergeordnete Ebene zu Feldgeräten und machen diese auch in Zukunft nicht unnötig.

Nach heutigem Ermessen dürfte eine künftige Ethernet-basierte Feldgerätekommunikation eine Verwendung eines hersteller- und plattformunabhängigen Industriestandards OPC UA (Open Platforms Communication Unified Architecture) und eine Erweiterung des IEEE-802.1-Ethernet-Standards um eine Echtzeitfähigkeit umfassen, welche als TSN (Time Sensitive Networks) derzeit Gegenstand von Normungsaktivitäten ist. Neben deterministischen Datenübertragungen im Sub-Millisekundenbereich werden mit TSN auch Anforderungen in Hinblick auf eine einfache Konfigurierbarkeit und herstellerübergreifende Interoperabilität adressiert.

Im Speicherbereich 102 werden neben den Steuerungsprozessen SP1,SP2,SP3,SP4 weitere Ein-Ausgabe-Prozesse IO1,IO2 zum Ablauf gebracht, welche die Schnittstelle 130 zur paketorientierten Kommunikation ansteuern. Diese Ein-Ausgabe-Prozesse IO1,IO2 können ihrerseits als Steuerungsprozess analog zu den Steuerungsprozessen SP1,SP2,SP3,SP4 ausgestaltet sein. Alternativ können diese Ein-Ausgabe-Prozesse IO1,IO2 auch eine gegenüber den Steuerungsprozessen SP1,SP2,SP3,SP4 gesonderte Stellung einnehmen, beispielsweise weil diese Bestandteil eines - nicht dargestellten - Betriebssystem der Prozesssteuerungseinheit 100 sind. Die Ein-Ausgabe-Prozesse IO1,IO2 beinhalten beispielweise eine Webserver-Applikation oder eine OPC-UA-Applikation.

Aus der Mehrzahl von Steuerungsprozessen SP1,SP2,SP3,SP4 in der Prozesssteuerungseinheit 100 sind beispielsweise zwei Steuerungsprozesse SP2,SP4 zur Steuerung eines industriellen Prozesses auf der Anlage 500 eingerichtet, während weitere Steuerungsprozesse SP1,SP3 diese Steuerung unterstützen oder zusätzliche Funktionalitäten bieten.

Aufgrund der modularen Natur der Steuerungsprozesse SP1,SP2,SP3,SP4 ist ein interprozessualer Datenaustausch zwischen den Steuerungsprozessen SP1,SP2,SP3,SP4 erforderlich. Auf diesen Datenaustausch wird im Folgenden allgemein als ein Austausch von Prozessvariablen eingegangen. Diese Prozessvariablen umfassen alle interprozessual ausgetauschten Daten wie z.B. binäre Werte, beispielsweise Flags, welcher das Eintreten oder Nicht-Eintreten einer Bedingung anzeigen, Adressen auszulesender oder zu beschreibender Speicherzellen oder deren Werte, weiterhin auch numerische Werte, Zeichenketten usw. Insbesondere ist der Inhalt dieser Prozessvariablen nicht eingeschränkt auf Inhalte zur Unterstützung der eigentlichen industriellen Steuerungsaufgabe der Prozesssteuerungseinheit 100.

Ein interprozessualer Datenaustausch zwischen modularen Steuerungsprozessen wird im Stand der Technik gegenwärtig im jeweiligen Steuerungsprozess selbst definiert, beispielsweise unter Verwendung einer gemeinsam benutzten Speicherzelle in einem Register oder Cache, auf die beide Steuerungsprozesse lesend oder schreibend zugreifen. Hierzu ist derzeit vorgesehen, dass die Verknüpfung im Programmcode des jeweiligen Steuerungsprozesses selbst angelegt ist. Eine derartige derzeit praktizierte programmtechnische Verknüpfung erfolgt beispielsweise durch eine Adresse oder einen Zeiger bzw. Pointer auf eine Adresse einer gemeinsam benutzten Speicherzelle.

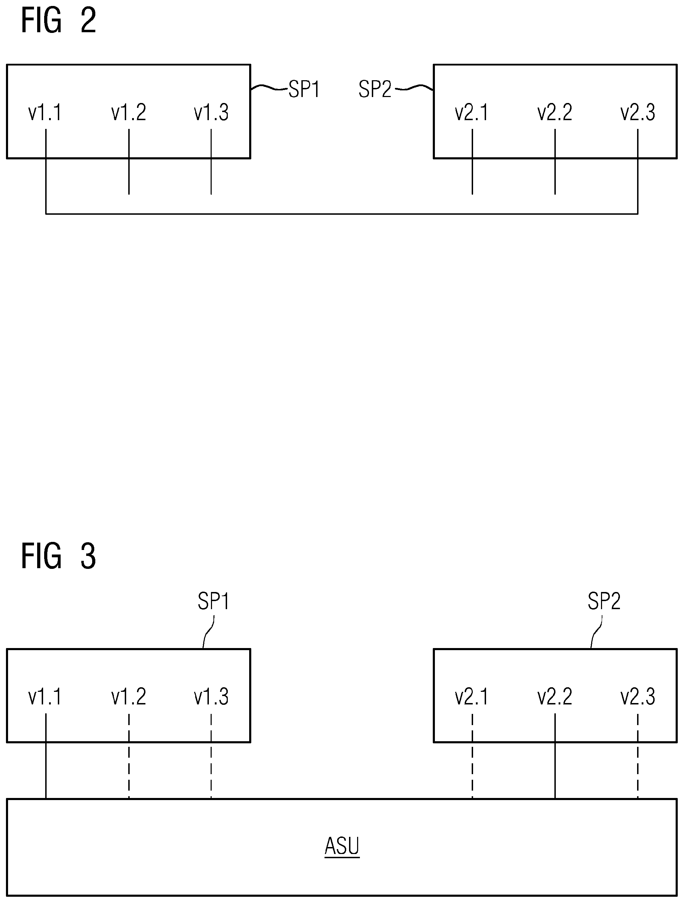

In FIG 2 ist der Austausch einer Prozessvariablen zwischen zwei Steuerungsprozessen SP1, SP2 gemäß dem Stand der Technik detaillierter dargestellt. Der erste Steuerungsprozess SP1 verfüge hier ausschnittsweise über drei Prozessvariablen v1.1, v1.2, v1.3. Der zweite Steuerungsprozess SP2 verfügt - ebenfalls ausschnittsweise - über drei Prozessvariablen v2.1, v2.2, v2.3.

Die Prozessvariable v1.1 des ersten Steuerungsprozesses SP1 ist mit der Prozessvariable v2.3 des zweiten Steuerungsprozesses SP2 logisch verbunden. Unter dieser logischen - zeichnerisch durch eine die besagten Prozessvariablen verbindende Linie dargestellten - Verbindung ist zu verstehen, dass im Programmcode des ersten Steuerungsprozess SP1 ein lesender oder schreibender Zugriff auf die Prozessvariable v2.3 des zweiten Steuerungsprozesses SP2 realisiert ist. Umgekehrt ist im Programmcode des zweiten Steuerungsprozess SP2 ein lesender oder schreibender Zugriff auf die Prozessvariable v1.1 des ersten Steuerungsprozesses SP1 realisiert. Die Bezugnahme auf die jeweils andere prozessexterne Variable kann dabei im Programm selbst - oder alternativ durch das Betriebssystem aufgelöst oder umgewertet - durch Bezugnahme auf eine Adresse oder einen Zeiger auf eine Adresse einer gemeinsam benutzten Speicherzelle erfolgen. In jedem Fall ist die Bezugnahme auf die prozessexterne Variable im Programmcode des jeweiligen Steuerprogramms selbst implementiert.

Ein im jeweiligen Steuerungsprozess selbst definierter interprozessualer Datenaustausch zwischen modularen Steuerungsprozessen hat mehrere Nachteile:
- Zusätzliche oder - beispielsweise im Zuge eines Updates - geänderte Steuerungsprozesse können nicht dynamisch eingebracht werden, da ein interprozessualer Datenaustausch zwischen einem geänderten Steuerungsprozess und einem bestehenden Steuerungsprozess nicht für alle Prozessvariablen funktioniert, beispielsweise wenn für einen geänderten Steuerungsprozess mehr oder andere Prozessvariablen kommuniziert werden sollen als für den ursprünglichen Steuerungsprozess.
- Weiterhin besteht derzeit keine Möglichkeit, einen interprozessualen Datenaustausch eines bestehenden, laufenden Steuerungsprozess dynamisch umzuleiten, während dessen Kommunikationspartner - ein zu ändernder Steuerungsprozess - einem Update unterliegt.

Wird im Laufe des Betriebs eine Änderung der Konfiguration erforderlich, bei der die Prozessvariable v1.1 nicht mehr mit der Prozessvariable v2.2 des zweiten Steuerungsprozesses SP2 logisch verknüpft sein soll, sondern beispielsweise mit der Prozessvariablen v2.3, ist mit der derzeitigen programmtechnischen Verknüpfung folgendes Vorgehen unausweichlich:
- der Betrieb der Prozesssteuerungseinheit 100 wird gestoppt;
- der Quellcode des ersten Steuerungsprozess SP1 wird hinsichtlich der beschriebenen logischen Verknüpfung der Prozessvariablen v1.1 mit der prozessexternen Prozessvariablen v2.3 überarbeitet;
- der Quellcode des überarbeiteten ersten Steuerungsprozess SP1 wird kompiliert und der kompilierte Programmcode in der Prozesssteuerungseinheit 100 geladen; und;
- die Prozesssteuerungseinheit 100 wird neu gestartet.

Derzeitige Prozesssteuerungseinheiten sind also durch eine mangelnde Flexibilität aufgrund ihres monolithischen Aufbaus sowie ihrer starken Kopplung von Hardware und Software geprägt. Eine Skalierbarkeit bezüglich der Funktionalität von Prozesssteuerungseinheiten kann derzeit lediglich durch Hinzufügen weiterer Prozesssteuerungseinheiten erfolgen. Veränderungen in der physischen oder datentechnischen Welt erfordern häufig eine Neukonfiguration, eine Neukompilierung und üblicherweise auch einen Neustart der beteiligten Prozesssteuerungseinheiten. Dabei müssen die neu kompilierten Komponenten zusätzlich zu den laufenden Komponenten auf der Prozesssteuerungseinheit abgelegt werden, was einen erhöhten Speicherbedarf bedeutet.

Die Erfindung löst diese derzeitig bestehenden Probleme durch Abkehr von einem im jeweiligen Steuerungsprozess selbst definierten interprozessualen Datenaustausch zwischen modularen Steuerungsprozessen. Erfindungsgemäß ist vorgesehen, den Datenaustausch von Prozessvariablen nicht direkt zwischen Steuerungsprozessen, sondern über ein zwischengeschaltetes Zuordnungsmodul vorzusehen.

Die Prozessvariable umfasst eine Prozessvariablenidentifikation - etwa eine Adresse, einen Prozessvariablennamen etc. - sowie einen Prozessvariablenwert, insbesondere den zahlenmäßigen Wert einer Messgröße in einem vorgegebenen, ansonsten beliebigen, Datenformat oder auch eine binären Wert bzw. Flag, welcher das Eintreten oder Nicht-Eintreten einer Bedingung anzeigt.

Unter erneuter Bezugnahme auf FIG. 1 ist erfindungsgemäß zum Austausch von Prozessvariablen ein Zuordnungsmodul ASU eingerichtet, durch welches eine von einem ersten Steuerungsprozess SP1 übergebene Prozessvariable empfangen wird und anschließend eine Zuordnung der Prozessvariable - d.h. an welchen Steuerungsprozess oder an welche Steuerungsprozesse die Prozessvariable zu übergeben ist - ermittelt wird.

In einer ersten, einfachen, Ausführungsform ist dieses Zuordnungsmodul ASU als gemeinsamer Datenbus zwischen mehreren Steuerungsprozessen ausgestaltet. Die Zuordnung erfolgt erfindungsgemäß nunmehr dynamisch, d.h. zur Laufzeit der Prozesssteuerungseinheit. Eine solche dynamische Zuordnung erfolgt anhand einer Zuordnungsvorschrift, welche in dieser Ausführungsform beispielsweise in einer dem Datenbus zugeordneten Verknüpfungstabelle abgelegt ist. Die Verknüpfungstabelle ist beispielsweise als eine von einer Software verwaltbaren Datenstruktur bzw. Datenbank implementiert.

Gemäß dieser erfindungsgemäßen Ausgestaltung kann eine Änderung der Zuordnung während eines laufenden Betriebs der Prozesssteuerungseinheit 100 durch das Zuordnungsmodul ASU - hier ausgestaltet als Datenbus mit einer dem Datenbus zugeordneten Verknüpfungstabelle - bewirkt werden, ohne dass hierzu ein Betriebsstop der Prozesssteuerungseinheit 100, eine Änderung im Quellcode der Steuerungsprozesse, ein erneutes kompilieren und laden der Steuerungsprozesse oder ein Neustart der Prozesssteuerungseinheit 100 erforderlich sind.

Die - nicht dargestellte - Zuordnungstabelle des Zuordnungsmoduls ASU kann in vorteilhafter Weise einfach erstellt und verwaltet werden, da durch die Zuordnungstabelle lediglich die jeweiligen Prozessvariablen der beteiligten Steuerungsprozesse miteinander verknüpft werden. Die in den Steuerungsprozessen angewandten Prozessvariablenidentifikationen, z.B. Variablennamen, Datentypen und weitere Informationen der einzelnen Softwarekomponenten können z.B. durch einen außerhalb der Prozesssteuerungseinheit ablaufenden Konfigurationsprozess - beispielsweise einem Engineeringsystem - gesammelt und für die Verknüpfung verwendet werden. Das Engineering kann dadurch die Konsistenz der Verbindung überprüfen. Eine Zuordnung kann sowohl textuell - also in Form strukturiert formulierter Zuordnungsvorschriften - als auch graphisch - also in Form eines maschinenlesbaren Verschaltungsplans - vorgenommen werden.

Beim Hochfahren der Prozesssteuerungseinheit 100 kann die Konfiguration der verknüpften Prozessvariablen in der Zuordnungstabelle hinterlegt werden, d.h. beispielsweise die in FIG. 3 gezeigte Zuordnung einer Prozessvariable, welche im ersten Steuerungsprozess SP1 die Prozessvariablenidentifikation v1.1 und im zweiten Steuerungsprozess SP2 die Prozessvariablenidentifikation v2.2 umfasst. Die Datenstruktur der Zuordnungstabelle, in der beim Hochfahren der Prozesssteuerungseinheit die Zuordnung der Prozessvariablenidentifikation v1.1 und v2.2 beschrieben wurde, kann im laufenden Betrieb - d.h. dynamisch - jederzeit angepasst werden. Dies wird in FIG. 3 durch gestrichelte Linien verdeutlicht, welche den Datenbus des Zuordnungsmoduls ASU alternativ oder zusätzlich mit weiteren Prozessvariablenidentifikationen v1.2, v1.3, v2.1, v2.3 verbinden.

Im laufenden Betrieb ist der erste Steuerungsprozess SP1 so eingerichtet, dass ein Austausch der besagten Prozessvariable - welcher im ersten Steuerungsprozess SP1 die Prozessvariablenidentifikation v1.1 zugeordnet ist - über das Zuordnungsmodul ASU mit dem zweiten Steuerungsprozess SP2 derart vorgesehen ist, dass die vom ersten Steuerungsprozess SP1 übergebene Prozessvariable vom Zuordnungsmodul ASU empfangen wird. Im Zuordnungsmodul ASU wird dann die Prozessvariablenidentifikation v1.1 der Prozessvariable ausgelesen. Die Prozessvariable wird dann an die Zuordnungsvorschrift im Zuordnungsmodul ASU übergeben. Gemäß dieser Zuordnungsvorschrift wird die im Zuordnungsmodul ausgelesene Prozessvariablenidentifikation v1.1 ersetzt durch die von der Zuordnungsvorschrift vorgegebenen Prozessvariablenidentifikation v2.3. Das Zuordnungsmodul ASU übergibt die besagte Prozessvariable mit der nunmehr Prozessvariablenidentifikation v2.3 an den zweiten Steuerungsprozess SP2. Der Prozessvariablenwert verbleibt vorzugsweise unverändert.

In einer zweiten Ausführungsform ist dieses Zuordnungsmodul ASU als Steuerungsprozess ausgestaltet. In Hinblick auf die FIG. 1 hätte dies zur Folge, dass sich das Zuordnungsmodul ASU nunmehr darstellerisch innerhalb des strichlierten Bereichs des Speicherbereichs 102 befindet, in dem die Mehrzahl von Steuerungsprozessen SP1,SP2,SP3,SP4 geladen ist.

Im Zuordnungsmodul ASU erfolgt eine Speicherung der Prozessvariablen in einem definierbaren Speicherbereich, also beispielsweise eines vom Zuordnungsmodul ASU verwalteten Register eines prozessornahen Registerspeichers.

Die Zuordnung gemäß dieser zweiten Ausführungsform erfolgt im Wesentlichen wie oben anhand des ersten Ausführungsbeispiels beschrieben. Im laufenden Betrieb ist der erste Steuerungsprozess SP1 so eingerichtet, dass ein Austausch der besagten Prozessvariable - welcher im ersten Steuerungsprozess SP1 die Prozessvariablenidentifikation v1.1 zugeordnet ist - über das Zuordnungsmodul ASU mit dem zweiten Steuerungsprozess SP2 derart vorgesehen ist, dass die vom ersten Steuerungsprozess SP1 übergebene Prozessvariable vom Zuordnungsmodul ASU zunächst empfangen wird. Im Zuordnungsmodul ASU wird dann die Prozessvariablenidentifikation v1.1 der Prozessvariable ausgelesen. Die Prozessvariable wird dann an die Zuordnungsvorschrift im Zuordnungsmodul ASU übergeben. Die Zuordnungsvorschrift ist beispielswiese als Zuordnungstabelle oder als Datenbank ausgeführt, auf welche durch den Steuerungsprozess des Zuordnungsmoduls ASU zugegriffen wird. Gemäß dieser Zuordnungsvorschrift wird die im Zuordnungsmodul ASU ausgelesene Prozessvariablenidentifikation v1.1 ersetzt durch die von der Zuordnungsvorschrift vorgegebenen Prozessvariablenidentifikation v2.3. Das Zuordnungsmodul ASU übergibt die besagte Prozessvariable mit der nunmehr Prozessvariablenidentifikation v2.3 an den zweiten Steuerungsprozess SP2. Der Prozessvariablenwert verbleibt vorzugsweise unverändert.

Die oben genannte Zuordnungsvorschrift, bei der die im Zuordnungsmodul ausgelesene Prozessvariablenidentifikation v1.1 durch eine von der Zuordnungsvorschrift vorgegebenen Prozessvariablenidentifikation v2.3 ersetzt wird, ist ein optionaler Schritt, wenn die Prozessvariablenidentifikationen v1.1, v2.3 nicht identisch sind. Bei gleichen Prozessvariablenidentifikationen, also beispielsweise einer systemweit gültigen und lesbaren Prozessvariablenidentifikation »Temperature_Sensor_34«, kann diese Maßnahme entfallen.

Im Folgenden wird eine dynamische Änderung der Zuordnungsvorschrift näher erläutert. Wird eine Änderung der Konfiguration erforderlich, dass die Prozessvariable mit der Prozessvariablenidentifikation v1.1 nicht mehr mit der Prozessvariable mit der Prozessvariablenidentifikation v2.2 des zweiten Steuerungsprozesses SP2 logisch verknüpft sein soll, sondern beispielsweise mit der Prozessvariablen mit der Prozessvariablenidentifikation v2.3, ist dies im Stand der Technik bekannten programmtechnischen Verknüpfung unweigerlich mit einer Änderung der beteiligten Steuerungsprozesse SP1,SP2 einschließlich eines Neustarts des Systems verbunden.

Bislang bekannte Prozesssteuerungseinheiten erreichen die Möglichkeit, Änderung der Steuerungsprozesse SP1,SP2,SP3,SP4 im laufenden System durchzuführen, nur durch hohe Aufwände im Engineering und im Laufzeitsystem der Hardware. Um eine Änderung zu erreichen, muss beispielsweise im Speicherbereich 102 der Prozesssteuerungseinheit 100 für diese möglichen Änderungen Speicherplatz vorgehalten werden, in welchem die Änderungen temporär hinterlegt werden können. Für die Änderungen muss das Programm kompiliert werden und es sind nur bestimmte Änderungen im laufenden Betrieb möglich.

Mit Einsatz der erfindungsgemäßen Mittel unter Beteiligung der Zuordnungseinheit ASU ist eine solche Änderung der beteiligten Steuerungsprozesse SP1,SP2 in vorteilhafter Weise unnötig. Stattdessen wird die Zuordnungsvorschrift in der Zuordnungseinheit ASU mit einem auch während des Betriebs der Prozesssteuerungseinheit 100 möglichen Zugriff durch einen Konfigurationsprozess, etwa in einem einfachen Engineeringsystem, geändert.

Gemäß einer Ausgestaltung ist vorgesehen, dass das Zuordnungsmodul ASU eine Schnittstelle zu einem außerhalb der Prozesssteuerungseinheit ablaufenden Konfigurationsprozess aufweist. Mit Bezugnahme auf FIG. 1 ist beispielsweise eine programmtechnische Schnittstelle durch einen Zugriff des Zuordnungsmodul ASU über einen der Ein-Ausgabe-Prozesse IO1,IO2 auf die Schnittstelle 130 zur paketorientierten Kommunikation ausgebildet. Alternativ verfügt das Zuordnungsmodul ASU über eine separate - nicht dargestellte - externe Schnittstelle. Über die Schnittstelle wird beispielsweise eine Webserver-Applikation zur Ausführung gebracht, welche einen Zugriff auf die Zuordnungsvorschrift erlaubt. Beide Ausführungsformen des Zuordnungsmoduls ASU bilden eine Schnittstelle zu einem außerhalb der Prozesssteuerungseinheit 100 ablaufenden - nicht dargestellten -Konfigurationsprozess.

Diese vorteilhafte Maßnahme gewährleistet, dass ein Konfigurationsprozess zum Zweck einer Änderung der Zuordnungsvorschrift auf das Zuordnungsmodul ASU zugreifen kann, ohne dass der dem Zuordnungsmodul 100 zugrundeliegende Programmcode insgesamt geändert oder gar neu kompiliert werden muss.

Im Folgenden wird eine weitere vorteilhafte Ausgestaltung beschrieben, welche ebenfalls die oben beschriebene Schnittstelle des Zuordnungsmoduls ASU zu einem außerhalb der Prozesssteuerungseinheit ablaufenden Prozess verwendet. Für Testzwecke ist es oftmals sinnvoll, das Verhalten von Steuerprogrammen oder auch das Verhalten einzelner physischer Bauelemente in ihrem Wirkzusammenhang innerhalb der Prozesssteuerungseinheit 100 gezielt zu kontrollieren oder zu testen.

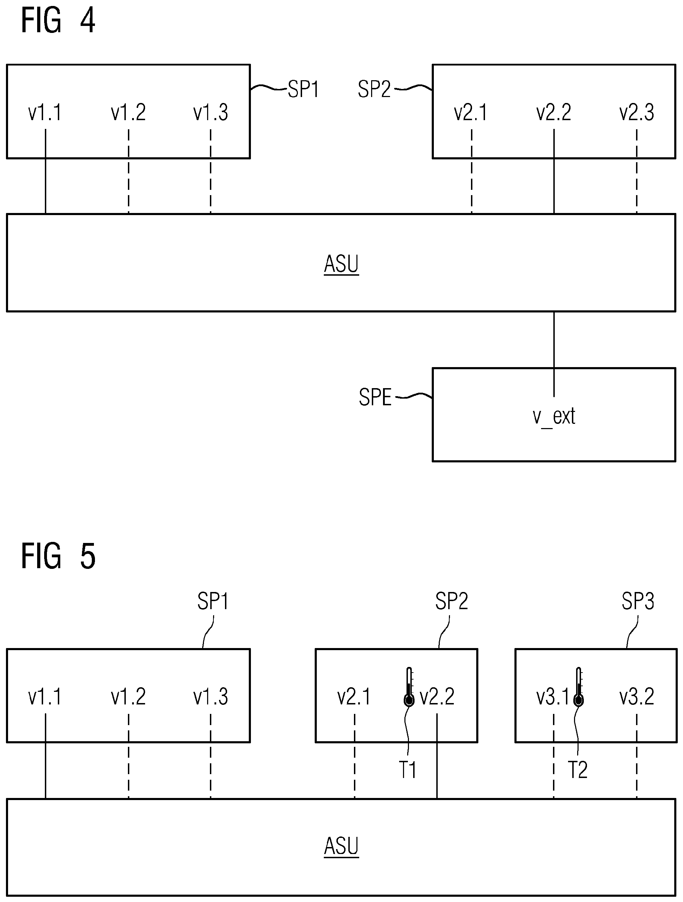

In einem beispielhaften Fall soll nunmehr mit Bezug auf FIG. 4 angenommen werden, dass das Verhalten der Prozessvariable mit der innerhalb des ersten Steuerungsprozess SP1 geltenden Prozessvariablenidentifikation v1.1 überprüft werden soll. Über die oben besagte Schnittstelle wird hierzu ein auf einem externen - nicht dargestellten - Prüfgerät ablaufender externer Prozess SPE zum Ablauf gebracht, welcher über die Schnittstelle Zugriff auf das Zuordnungsmodul ASU und damit auf dessen Zuordnungsvorschrift hat.

Der externe Prozess SPE veranlasst zunächst durch Eintrag in der Zuordnungsvorschrift der Zuordnungseinheit ASU eine Zuordnung zur Prozessvariablen mit der Prozessvariablenidentifikation v_ext. Anschließend wird die existierende Zuordnung der Prozessvariable mit der im ersten Steuerungsprozess SP1 geltenden Prozessvariablenidentifikation v1.1 nicht mehr - oder auch: nicht mehr ausschließlich - mit der der Prozessvariablenidentifikation v2.2 des zweiten Steuerungsprozesses SP2 logisch verknüpft, sondern mit der Prozessvariablen mit der Prozessvariablenidentifikation v_ext. Dynamisch, d.h. zur Laufzeit der Prozessteuerungseinheit 100, wird also eine Verknüpfung der Prozessvariablenidentifikation v1.1 mit der Prozessvariablenidentifikation v_ext erstellt. Die vormals geltende Verknüpfung der Prozessvariablenidentifikation v1.1 mit der Prozessvariablenidentifikation v2.2 bleibt entweder - wie in der Zeichnung durch eine durchgezogene Linie symbolisiert - zusätzlich bestehen oder wird, durch Löschen des Verknüpfungeintrags zwischen der Prozessvariablenidentifikation v1.1 mit der Prozessvariablenidentifikation v2.2 in der Zuordnungstabelle, getrennt.

Die erstgenannte Vorsehung einer zusätzlichen Verknüpfung eignet sich insbesondere für Diagnose- oder Überwachungszwecke, bei der der Austausch der Prozessvariable mit der im ersten Steuerungsprozess SP1 geltenden Prozessvariablenidentifikation v1.1 und der im zweiten Steuerungsprozess SP2 geltenden Prozessvariablenidentifikation v2.2 zum Zweck der Überwachung oder Diagnose unangetastet bleiben soll. Die zweitgenannte Vorsehung einer alternativen Verknüpfung eignet sich insbesondere für Simulationszwecke, bei der der Austausch der Prozessvariable mit der im ersten Steuerungsprozess SP1 geltenden Prozessvariablenidentifikation v1.1 zu Simulations- oder Testzwecken durch einen Austausch mit der im externen Prozess SPE geltenden Prozessvariablenidentifikation v_ext ersetzt werden soll. Der externe Prozess SPE liefert hierbei simulierte Prozessvariablen, genauer gesagt Prozessvariablen, welche zum Zweck einer Simulation erzeugte Prozessvariablenwerte aufweisen. Ein Betrieb mit Hilfe von simulierten Werten kann ähnlich dem genannten Testbetrieb erfolgen, d.h. es ist ein Betrieb möglich, in dem reale Messgrößen mit simulierten Werten temporär, ohne Unterbrechung des Gesamtsystems, gemeinsam genutzt werden.

Im Folgenden wird eine weitere vorteilhafte Ausgestaltung beschrieben, welche einen ausfallsicheren und/oder hochverfügbaren Betrieb der Prozesssteuerungseinheit 100 ermöglicht. In einem beispielhaften Fall soll nunmehr mit Bezug auf FIG. 5 angenommen werden, dass ein erster Temperatursensor T1 eine Prozessvariable liefert, welcher innerhalb eines den ersten Temperatursensor T1 ansteuernden Steuerungsprozesses SP2 die Prozessvariablenidentifikation v2.2 zugeordnet ist. Ein zweiter Temperatursensor T2 liefert eine Prozessvariable, welcher innerhalb eines den zweiten Temperatursensor T2 ansteuernden Steuerungsprozesses SP3 eine Prozessvariablenidentifikation v3.1 zugeordnet ist.

Die beiden Temperatursensoren T1, T2 seien dabei benachbart, aber physikalisch unabhängig voneinander am gleichen Messort angeordnet, so dass beide Temperatursensoren T1, T2 idealerweise einen identischen Temperaturwert messen. Dieser Temperaturwert wird in wiederkehrenden Abständen vom ersten Steuerungsprozesses SP1 benötigt.

Um den Temperaturwert auszulesen, ist der erste Steuerungsprozess SP1 so eingerichtet, dass ein Auslesen der den Temperaturwert als Prozessvariablenwert enthaltenden Prozessvariable - welcher im Steuerungsprozess SP1 die Prozessvariablenidentifikation v1.1 zugeordnet ist - über das Zuordnungsmodul ASU erfolgt. Im Zuordnungsmodul ASU wird die Prozessvariablenidentifikation v2.2 der Prozessvariable ausgelesen, mit der der den ersten Temperatursensor T1 steuernde Steuerungsprozess SP2 den Temperaturwert als Prozessvariablenwert enthaltende Prozessvariable an das Zuordnungsmodul ASU übergibt. Die Prozessvariable wird an die Zuordnungsvorschrift im Zuordnungsmodul ASU übergeben. Gemäß dieser Zuordnungsvorschrift wird die im Zuordnungsmodul ausgelesene Prozessvariablenidentifikation v2.2 ersetzt durch die von der Zuordnungsvorschrift vorgegebenen Prozessvariablenidentifikation v1.1. Das Zuordnungsmodul ASU übergibt die besagte Prozessvariable mit der nunmehr geänderten Prozessvariablenidentifikation v1.1 an den ersten Steuerungsprozess SP1. Der Prozessvariablenwert verbleibt vorzugsweise unverändert. Die Zuordnungsvorschrift ist also für eine Verknüpfung der Prozessvariablenidentifikation v2.2 mit der Prozessvariablenidentifikation v1.1 eingerichtet.

Fällt nun der erste Temperatursensor T1 aus, kann der erste Steuerungsprozess SP1 oder ein anderer Steuerungsprozess der Prozesssteuerungseinheit 100 einen dynamischen Wechsel auf den bezüglich des gemessenen Temperaturmesswerts gleichwertigen Temperatursensor T2 veranlassen. Dieser Wechsel erfolgt durch einen geänderten Eintrag in der Zuordnungsvorschrift, in der nunmehr eine Verknüpfung der Prozessvariablenidentifikation v3.1 mit der Prozessvariablenidentifikation v1.1 eingerichtet wird. Im Zuge dessen erhält der erster Steuerungsprozesses SP1 nunmehr den Temperaturmesswert vom zweiten Temperatursensor T2.

In Weiterbildung der oben beschriebenen Ausgestaltung ist das Zuordnungsmodul ASU - welches seinerseits als Steuerungsprozess ausgestaltet ist - so ausgebildet, dass der Prozessvariablenwert - hier der Temperaturmesswert - der Prozessvariable vom Zuordnungsmodul ASU selbst überwacht wird. Wird ein definierter Toleranzbereich bezüglich eines überwachten Prozessvariablenwerts überschritten, kann das Zuordnungsmodul ASU eine Fehler- oder Alarmbedingung auslösen, welche gegebenenfalls weitere Aktionen nach sich zieht, durch die etwa die Prozesssteuerungseinheit 100 in einen sicheren Zustand versetzt wird.

In Weiterbildung der oben beschriebenen Ausgestaltung ist für einige Anwendungsfälle auch eine Verknüpfung zwischen mehr als zwei Prozessvariablenidentifikationen vorteilhaft. Ein solcher Anwendungsfall betrifft beispielsweise eine Implementierung sicherheitsrelevanter Systeme, bei denen mehrere Steuerungsprozesse gleichzeitig und redundant mit einem per Prozessvariable gelieferten Wert eines anderen Steuerungsprozesses arbeiten.

In Kombination mit der oben beschriebenen Ausgestaltung einer dynamischen Variablenumschaltung sind damit auch ausfallsichere und hochverfügbare Prozesssteuerungseinheit realisierbar, bei denen nicht nur im laufenden Betrieb zwischen vom restlichen System unabhängigen Prozessvariablen, z.B. Sensorwerten, sondern auch zwischen Komponenten - insbesondere Steuerungsprozessen - umgeschaltet werden kann, die Abhängigkeiten zu anderen Prozessvariablen des Systems aufweisen.

Das Zuordnungsmodul ASU muss in einer einfachen Ausgestaltung nicht notwendigerweise zyklusorientiert arbeiten. Mit anderen Worten verhält sich ein solches einfach gestaltetes Zuordnungsmodul ASU gegenüber zeitlichen Anforderungen der zu übertragenden Prozessvariablen agnostisch. In dieser einfachen Ausgestaltung des Zuordnungsmoduls ASU steht eine geänderte Prozessvariable dann ohne besondere zeitliche Randbedingungen zur Verfügung, sobald deren Prozessvariablenidentifikation und/oder deren Prozessvariablenwert eine Änderung erfahren hat.

In einer alternativen Ausgestaltung des Zuordnungsmoduls ASU wirkt dieses an Synchronisierungsereignissen der Prozesssteuerungseinheit 100 aktiv mit, wobei die Übergabe der mindestens einen Prozessvariablen an mindestens einen Steuerungsprozess zyklusorientiert erfolgt. Weiterhin kann das Zuordnungsmodul ASU in einer weiteren Ausgestaltung der Erfindung flexibel ausgelegt sein, um Szenarien mit unterschiedlichen Anforderungen an einen deterministischen Datenaustausch - oftmals auch als Echtzeit-Kritikalität bezeichnet - zu bedienen. Zusammen mit einer Synchronisierung zwischen den Komponenten bzw. Steuerungsprozessen der Prozesssteuerungseinheit 100 lassen sich dadurch beliebige Echtzeit-Szenarien abdecken. Dazu gehören zeitbeschränkte, zyklengebundene Verarbeitungsweisen wie in herkömmlichen SPS (speicherprogrammierbaren Steuerungen) bekannt, alternativ oder zusätzlich auch eine frei ereignisgetriebene Verarbeitung oder eine zeitlich vollständig ungebundene Variablenverarbeitung.

Die Unabhängigkeit der über das Zuordnungsmodul ASU miteinander verknüpften Prozessvariablen lässt dabei nicht nur einen Mischbetrieb bei unterschiedlichen Prozessvariablen zu, sondern durch die freie Mehrfachverknüpfung auch einen Mischbetrieb - zyklisch oder frei - zwischen ereignisbasierter und zeitlich uneingeschränkter Verarbeitung. Das kann zum Beispiel bedeuten, dass dieselbe Prozessvariable, die für eine streng zyklische Verarbeitung genutzt wird, auch etwa von einer langsamen, zeitlich unkritischen Überwachungskomponente genutzt werden kann.

Zusammenfassend ist die erfindungsgemäße Prozesssteuerungseinheit zur Ausführung einer Mehrzahl von Steuerungsprozessen eingerichtet, wobei mindestens ein auf der Prozesssteuerungseinheit zur Abarbeitung gebrachter erster Steuerungsprozess erfindungsgemäß so eingerichtet ist, dass zu seiner Abarbeitung ein Austausch von Prozessvariablen nicht direkt mit einem zweiten Steuerungsprozess vorgesehen ist, sondern dass dieser Austausch über ein zwischengeschaltetes Zuordnungsmodul erfolgt. Anhand einer Zuordnungsvorschrift wird ermittelt, an welchen Steuerungsprozess oder an welche Steuerungsprozesse die Prozessvariablen zu übergeben ist. Ein besonderer Vorteil der Erfindung ist in der erhöhten Flexibilität im Austausch von Prozessvariablen zu sehen, welche in Abkehr von einer programmtechnisch eingefrorenen »logischen Verdrahtung« in den einzelnen Steuerungsprozessen nunmehr mittels eines Zuordnungsmodul erfolgt. Neustarts der Prozesssteuerungseinheit und damit verbundene Produktionsausfälle werden in vorteilhafter Weise unnötig. Zusätzliche Ressourcen in der Prozesssteuerungseinheit oder in einem Engineeringsystem können reduziert oder vermieden werden. Durch die verringerte Komplexität können die Steuerungssysteme und Engineeringsysteme einfacher und dadurch auch schneller entwickelt werden.

## Patentansprüche

1. Prozesssteuerungseinheit, eingerichtet zur Ausführung einer Mehrzahl von Steuerungsprozessen (SP1,SP2,...SP4), wobei mindestens ein Steuerungsprozess (SP2, SP4) zur Steuerung eines außerhalb der Prozesssteuerungseinheit (100) ablaufenden industriellen Prozesses (500) eingerichtet ist,
- wobei mindestens ein erster Steuerungsprozess (SP1) so eingerichtet ist, dass zu seiner Abarbeitung ein Austausch von Prozessvariablen über ein Zuordnungsmodul (ASU) der Prozesssteuerungseinheit (100) mit mindestens einem zweiten Steuerungsprozess (SP2) vorgesehen ist;
- **dadurch gekennzeichnet, dass** die Prozessvariable eine Prozessvariablenidentifikation und einen Prozessvariablenwert umfasst; und;
- wobei das Zuordnungsmodul (ASU) zum Austausch der Prozessvariablen dergestalt eingerichtet ist, dass eine vom ersten Steuerungsprozess (SP1) übergebene Prozessvariable empfangen wird, deren Prozessvariablenidentifikation ausgelesen und an eine Zuordnungsvorschrift übergeben wird und dass die vom ersten Steuerungsprozess (SP1) übergebene Prozessvariable anhand der Zuordnungsvorschrift an mindestens einen zweiten Steuerungsprozess (SP2) übergeben wird; und;
- wobei das Zuordnungsmodul (ASU) ein Steuerungsprozess ist, durch den eine Speicherung der Prozessvariablen in einem definierbaren Speicherbereich eines flüchtigen oder nichtflüchtigen Speichers vorgesehen ist.

2. Prozesssteuerungseinheit gemäß dem vorgenannten Patentanspruch 1, wobei das Zuordnungsmodul (ASU) so eingerichtet ist, dass für mindestens eine der an den mindestens einen zweiten Steuerungsprozess (SP2) übergebene Prozessvariable die im Zuordnungsmodul (ASU) ausgelesene Prozessvariablenidentifikation durch eine von der Zuordnungsvorschrift vorgegebenen Prozessvariablenidentifikation ersetzt wird.

3. Prozesssteuerungseinheit gemäß einem der vorgenannten Patentansprüche, wobei die Übergabe der mindestens einen Prozessvariablen an den mindestens einen zweiten Steuerungsprozess (SP2) zyklusorientiert erfolgt.

4. Prozesssteuerungseinheit gemäß einem der vorgenannten Patentansprüche 1 bis 2, wobei die Übergabe der mindestens einen Prozessvariablen an den mindestens einen zweiten Steuerungsprozess (SP2) innerhalb einer vorgebbaren Zeitspanne erfolgt.

5. Prozesssteuerungseinheit gemäß einem der vorgenannten Patentansprüche, wobei das Zuordnungsmodul (ASU) eine Schnittstelle zu einem außerhalb der Prozesssteuerungseinheit (100) ablaufenden Konfigurationsprozess (SPE) aufweist.

6. Prozesssteuerungseinheit gemäß einem der vorgenannten Patentansprüche, wobei mindestens ein Steuerungsprozess (SP2,SP4) zur Abarbeitung einer iterativen Folge von Steueranweisungen zur Steuerung des außerhalb der Prozesssteuerungseinheit (100) ablaufenden industriellen Prozesses (500) eingerichtet ist.

7. Prozesssteuerungseinheit gemäß einem der vorgenannten Patentansprüche 1 bis 6, wobei das Zuordnungsmodul (ASU) einen Datenbus mit einer zugeordneten Bus-Datenbank umfasst.

8. Prozesssteuerungseinheit gemäß Patentanspruch 7, wobei der Datenbus zur Übergabe mindestens eines Prozessvariablenwerts gemäß eines in der Bus-Datenbank zugeordneten Prozessvariablenidentifikation eingerichtet ist.

9. Verfahren zum interprozessualen Austausch von Prozessvariablen innerhalb einer Prozesssteuerungseinheit (100), in der eine Ausführung einer Mehrzahl von Steuerungsprozessen (SP1,SP2,...SP4) vorgesehen ist, wobei mindestens ein Steuerungsprozess (SP2,SP4) zur Steuerung eines außerhalb der Prozesssteuerungseinheit (100) ablaufenden industriellen Prozesses eingerichtet ist und wobei ein Austausch von Prozessvariablen eines ersten Steuerungsprozess (SP1) über ein Zuordnungsmodul (ASU) der Prozesssteuerungseinheit (100) mit mindestens einem zweiten Steuerungsprozess (SP2) erfolgt, **dadurch gekennzeichnet, dass** die Prozessvariable eine Prozessvariablenidentifikation und einen Prozessvariablenwert umfasst, das Verfahren umfassend:
- Empfang mindestens einer vom ersten Steuerungsprozess (SP1) übergebenen Prozessvariable durch das Zuordnungsmodul (ASU);
- Auslesen der Prozessvariablenidentifikation aus der vom ersten Steuerungsprozess (SP1) übergebenen Prozessvariable und übergeben der Prozessvariablenidentifikation an die Zuordnungsvorschrift;
- Speicherung der Prozessvariablen in einem definierbaren Speicherbereich eines flüchtigen oder nichtflüchtigen Speichers; und;
- Übergeben der vom ersten Steuerungsprozess (SP1) übergebenen Prozessvariable an mindestens einen zweiten Steuerungsprozess (SP2) anhand der Zuordnungsvorschrift.

10. Verfahren gemäß dem vorgenannten Patentanspruch 9, **dadurch gekennzeichnet, dass** für mindestens eine der an den mindestens einen zweiten Steuerungsprozess übergebene Prozessvariable die im Zuordnungsmodul (ASU) ausgelesene Prozessvariablenidentifikation durch eine von der Zuordnungsvorschrift vorgegebenen Prozessvariablenidentifikation ersetzt wird.

11. Verfahren gemäß einem der vorgenannten Patentansprüche 9 und 10, wobei die Übergabe der mindestens einen Prozessvariablen an den mindestens einen zweiten Steuerungsprozess (SP2) zyklusorientiert erfolgt.

12. Verfahren gemäß einem der vorgenannten Patentansprüche 9 bis 11, wobei die Übergabe der mindestens einen Prozessvariablen an den mindestens einen zweiten Steuerungsprozess (SP2) innerhalb einer vorgebbaren Zeitspanne erfolgt.

13. Computerprogrammprodukt mit einem Programmcode zur Durchführung eines Verfahrens nach einem der Ansprüche 9 bis 12, wenn der Programmcode als Steuerungsprozess in mindestens einem Prozessor einer Prozesssteuerungseinheit (100) ausgeführt wird.

## Claims

1. Process control unit, configured to execute a plurality of control processes (SP1, SP2, ...SP4), at least one control process (SP2, SP4) being configured to control an industrial process (500) taking place outside the process control unit (100),
- wherein at least one first control process (SP1) is configured such that for the handling thereof there is provision for an interchange of process variables with at least one second control process (SP2) via an association module (ASU) of the process control unit (100);
- **characterized in that** the process variable comprises a process variable identification and a process variable value; and;
- wherein the association module (ASU) is configured to interchange the process variables such that a process variable transferred from the first control process (SP1) is received, the process variable identification of which process variable is read and transferred to an association rule, and that the process variable transferred from the first control process (SP1) is transferred to at least one second control process (SP2) on the basis of the association rule; and;
- wherein the association module (ASU) is a control process that provides for storage of the process variables in a definable memory area of a volatile or non-volatile memory.

2. Process control unit according to preceding Claim 1, wherein the association module (ASU) is configured such that for at least one of the process variables transferred to the at least one second control process (SP2) the process variable identification read in the association module (ASU) is replaced by a process variable identification stipulated by the association rule.

3. Process control unit according to either of the preceding claims, wherein the transfer of the at least one process variable to the at least one second control process (SP2) is effected in cycle-oriented fashion.

4. Process control unit according to either of preceding Claims 1 and 2, wherein the transfer of the at least one process variable to the at least one second control process (SP2) is effected within a stipulable period.

5. Process control unit according to one of the preceding claims, wherein the association module (ASU) has an interface to a configuration process (SPE) taking place outside the process control unit (100).

6. Process control unit according to one of the preceding claims, wherein at least one control process (SP2, SP4) is configured to handle an iterative sequence of control instructions for controlling the industrial process (500) taking place outside the process control unit (100).

7. Process control unit according to one of preceding Claims 1 to 6, wherein the association module (ASU) comprises a data bus having an associated bus database.

8. Process control unit according to Claim 7, wherein the data bus is configured to transfer at least one process variable value according to a process variable identification associated in the bus database.

9. Method for interprocess interchange of process variables within a process control unit (100) in which there is provision for execution of a plurality of control processes (SP1, SP2, ...SP4), wherein at least one control process (SP2, SP4) is configured to control an industrial process taking place outside the process control unit (100) and wherein an interchange of process variables of a first control process (SP1) with at least one second control process (SP2) via an association module (ASU) of the process control unit (100) is effected, **characterized in that** the process variable comprises a process variable identification and a process variable value, the method comprising:
- receiving, by means of the association module (ASU), at least one process variable transferred from the first control process (SP1);
- reading the process variable identification from the process variable transferred from the first control process (SP1) and transferring the process variable identification to the association rule;
- storing the process variables in a definable memory area of a volatile or non-volatile memory; and;
- transferring the process variable transferred from the first control process (SP1) to at least one second control process (SP2) on the basis of the association rule.

10. Method according to preceding Claim 9, **characterized in that** for at least one of the process variables transferred to the at least one second control process the process variable identification read in the association module (ASU) is replaced by a process variable identification stipulated by the association rule.

11. Method according to either of preceding Claims 9 and 10, wherein the transfer of the at least one process variable to the at least one second control process (SP2) is effected in cycle-oriented fashion.

12. Method according to one of preceding Claims 9 to 11, wherein the transfer of the at least one process variable to the at least one second control process (SP2) is effected within a stipulable period.

13. Computer program product having a program code for performing a method according to one of Claims 9 to 12 when the program code is executed as a control process in at least one processor of a process control unit (100).

## Revendications

1. Unité de commande de processus, conçue pour l'exécution d'une pluralité de processus de commande (SP1, SP2, ...SP4), dans laquelle au moins un processus de commande (SP2, SP4) est conçu pour la commande d'un processus industriel (500) se déroulant en dehors de l'unité de commande de processus (100),
- dans laquelle au moins un premier processus de commande (SP1) est conçu de sorte que, pour son traitement, un échange de variables de processus est prévu par l'intermédiaire d'un module d'association (ASU) de l'unité de commande de processus (100) avec au moins un deuxième processus de commande (SP2) ;
- **caractérisée en ce que** la variable de processus comporte une identification de variable de processus et une valeur de variable de processus ; et ;
- dans laquelle le module d'association (ASU) est conçu pour l'échange des variables de processus de manière à ce que soit reçue une variable de processus transmise par le premier processus de commande (SP1), variable dont l'identification de variable de processus est lue et transmise à une prescription d'association, et à ce que soit transmise la variable de processus transmise par le premier processus de commande (SP1) à au moins un deuxième processus de commande (SP2) à l'aide de la prescription d'association ; et ;
- dans laquelle le module d'association (ASU) est un processus de commande par le biais duquel est prévu un stockage des variables de processus dans une zone de stockage définissable d'une mémoire volatile ou non volatile.

2. Unité de commande de processus selon la revendication précédente 1, dans laquelle le module d'association (ASU) est conçu de sorte que, pour au moins l'une des variables de processus transmises à l'au moins un deuxième processus de commande (SP2), l'identification de variable de processus lue dans le module d'association (ASU) soit remplacée par une identification de variable de processus prédéterminée par la prescription d'association.

3. Unité de commande de processus selon l'une des revendications précédentes, dans laquelle la transmission de l'au moins une variable de processus à l'au moins un deuxième processus de commande (SP2) s'effectue de manière orientée cycliquement.

4. Unité de commande de processus selon l'une des revendications précédentes 1 à 2, dans laquelle la transmission de l'au moins une variable de processus à l'au moins un deuxième processus de commande (SP2) s'effectue à l'intérieur d'une période de temps pouvant être prédéterminée.

5. Unité de commande de processus selon l'une des revendications précédentes, dans laquelle le module d'association (ASU) comprend une interface avec un processus de configuration (SPE) se déroulant en dehors de l'unité de commande de processus (100).

6. Unité de commande de processus selon l'une des revendications précédentes, dans laquelle au moins un processus de commande (SP2, SP4) est conçu pour le traitement d'une suite itérative d'instructions de commande pour la commande du processus industriel (500) se déroulant en dehors de l'unité de commande de processus (100).

7. Unité de commande de processus selon l'une des revendications précédentes 1 à 6, dans laquelle le module d'association (ASU) comporte un bus de données avec une base de données de bus associée.

8. Unité de commande de processus selon la revendication 7, dans laquelle le bus de données est conçu pour la transmission d'au moins une valeur de variable de processus selon une identification de variable de processus associée dans la base de données de bus.

9. Procédé pour l'échange entre processus de variables de processus à l'intérieur d'une unité de commande de processus (100) dans laquelle est prévue une exécution d'une pluralité de processus de commande (SP1, SP2, ...SP4), dans lequel au moins un processus de commande (SP2, SP4) est conçu pour la commande d'un processus industriel se déroulant en dehors de l'unité de commande de processus (100) et dans lequel un échange de variables de processus d'un premier processus de commande (SP1) s'effectue par l'intermédiaire d'un module d'association (ASU) de l'unité de commande de processus (100) avec au moins un deuxième processus de commande (SP2), **caractérisé en ce que** la variable de processus comporte une identification de variable de processus et une valeur de variable de processus, le procédé comportant :
- la réception, par le biais du module d'association (ASU), d'au moins une variable de processus transmise par le premier processus de commande (SP1) ;
- la lecture de l'identification de variable de processus à partir de la variable de processus transmise par le premier processus de commande (SP1) et la transmission de l'identification de variable de processus à la prescription d'association ;
- le stockage des variables de processus dans une zone de stockage définissable d'une mémoire volatile ou non volatile ; et ;
- la transmission de la variable de processus transmise par le premier processus de commande (SP1) à au moins un deuxième processus de commande (SP2) à l'aide de la prescription d'association.

10. Procédé selon la revendication précédente 9, **caractérisé en ce que**, pour au moins l'une des variables de processus transmises à l'au moins un deuxième processus de commande, l'identification de variable de processus lue dans le module d'association (ASU) est remplacée par une identification de variable de processus prédéterminée par la prescription d'association.

11. Procédé selon l'une des revendications précédentes 9 et 10, dans lequel la transmission de l'au moins une variable de processus à l'au moins un deuxième processus de commande (SP2) s'effectue de manière orientée cycliquement.

12. Procédé selon l'une des revendications précédentes 9 à 11, dans lequel la transmission de l'au moins une variable de processus à l'au moins un deuxième processus de commande (SP2) s'effectue à l'intérieur d'une période de temps pouvant être prédéterminée.

13. Produit de programme informatique avec un code de programme pour la mise en œuvre d'un procédé selon l'une des revendications 9 à 12 lorsque le code de programme est exécuté en tant que processus de commande dans au moins un processeur d'une unité de commande de processus (100).
